# EUROPEAN PATENT APPLICATION

(11) **EP 4 361 955 A1**
(43) Date of publication of application: **01.05.2024**
(21) Application number: 22203536.2
(22) Date of filing: 25.10.2022
(51) Int. Cl.: G06T 11/00

(54) **IMAGE PROCESSING METHOD**

(71) Applicant: Beijing Xiaomi Mobile Software Co., Ltd., Beijing 100085 (CN)
(72) Inventor: Rytkönen, Teemu, 33720 TAMPERE (FI); Tuna, Uygar, 33720 TAMPERE (FI); Hailu, Nahom, 33720 TAMPERE (FI); Karaoglu, Ali, 33720 TAMPERE (FI); Shetty, Ranjeeth, 33720 TAMPERE (FI)
(74) Representative: dompatent von Kreisler Selting Werner - Partnerschaft von Patent- und Rechtsanwälten mbB

(57) **Abstract**

Image processing method, in particular Image Quality Enhancement, IqE, method, with providing an input image and a mask discriminating at least a first area and a second area of the input image; providing one bilateral grid prediction network receiving the input image and the mask and generating more than one bilateral grid; applying each of the bilateral grid to the first area and the second area of the input image in order to create the output image.

## Description

It is an object of the present invention to provide an image processing method and in particular an image quality enhancement (IqE) method. Further, it is an object of the present invention to provide a device implementing such method and a software storage device.

The field of IqE is an active research area. In particular, with the upcoming of modern camera modules in smartphones IqE algorithm become more and more in the focus of development. Several approaches were made. The upcoming of artificial intelligence (AI) image processing HDR-Net was developed (MICHAEL GHARBI et al., ACM Transactions on Graphics, Vol. 36, No. 4, Article 118) which provides a deep bilateral learning algorithm for real time image enhancement. The HDR-Net algorithm comprises a low-resolution path and a high-resolution path. In the low-resolution path local and global features are determined and a single bilateral grid is determined form these local features and global features. In the high-resolution path a guide image is generated for edge preserving and afterwards the upsampled bilateral grid is applied to the image for image processing. Therein, the HDR-Net algorithm supports only a single style for each trained model/network and provides a global adaption of the image.

Thus, it is an object of the present invention to provide a more flexible method for image processing which can be used in real time.

The problem is solved by a method according to claim 1, a device according to claim 12 and a software storage device according to claim 14.

The present invention provides an image processing method, in particular an image quality enhancement (IqE) method. The method comprises the steps of:
Providing an input image and a mask discriminating at least a first area and a second area of the input image.
Providing one bilateral grid prediction network receiving the input image and the mask and generating more than one bilateral grid.
Applying each of the bilateral grid to the first area and/or the second area of the input image in order to create the output image.

Thus, by providing a mask discriminating at least a first area and a second area local and global adaption of the input image is feasible. Further, the present method provides more than one bilateral grid by only a single bilateral grid prediction network. Determining the bilateral grids may be implemented similar to the HDR-Net algorithm, wherein the output layer is specifically adapted in order to provide the more than one bilateral grids. Thus, tailored manipulation of the input image by the more than one bilateral grid is feasible, wherein only a single bilateral grid prediction network needs to be trained. Thus, the present method provides a more flexible approach than in the prior art. Since the generation of the more than one bilateral grid by the bilateral grid prediction network is fast, the present method can be applied in real time.

Preferably, the more than one bilateral grid is merged into a final bilateral grid before applying to the input image. Thus, only one final bilateral grid is applied to the input image. Alternatively, the more than one bilateral grids are individually applied. For the first alternative only one bilateral grid needs to be estimated from the low-resolution path (determining of the more than one bilateral grids on the basis of a low-resolution version of the input image) to be applied to the high-resolution input image. Thus, the step of upsampling the final bilateral grid requires reduced computational costs. However, for the second alternative training is simplified since a bilateral grid merge network, which also needs to be trained, can be avoided.

Preferably, the bilateral grid prediction network receives a low resolution input image having a resolution lower than the input image and the one or more bilateral grids or the final bilateral grid are upsampled before applied to the input image. Similar, the bilateral grid prediction network may receive a low resolution mask having a resolution lower than the initial mask. Thus, the input image is downsampled before providing the low resolution input image to the bilateral grid prediction network and the bilateral grids are determined on the basis of the low resolution version of the input image. Afterwards, the more than one bilateral grids or the final bilateral grid are upsampled or interpolated to the original resolution before applying the bilateral grid to the input image to generate the output image.

Preferably, the low resolution input image has a resolution which is less than 5 times smaller than the resolution of the input image, more preferably more than 10 times smaller. Thereby fast determining of the bilateral grid is feasible.

Preferably, the low resolution input mask has a resolution which is less than 5 times smaller than the resolution of the initial mask, more preferably more than 10 times smaller.

Preferably, the low resolution input image and the low resolution mask have the same resolution or a different resolution.

Preferably, the low resolution input image and/or the low resolution mask have a resolution of less than 512x512 and more preferably a resolution of 256x256.

Preferably, a plurality of styles are defined to be applied to the input image, the first area or the second area, wherein each style corresponds to a set of image parameters such that images of the same style have a similar appearance. Therein, the image parameters may encompass tone mapping, brightness and contrast enhancement, advanced color alterations or the like. The set of image parameters includes one or more of these parameters. For each style the image parameters are identically or at least similar. Thus, the one bilateral grid prediction network is able to support the plurality of styles.

Preferably, each bilateral grid corresponds to a different style. Thus, by the bilateral gird prediction network for each style one bilateral grid is generated. Hence, for the first area of the input image a bilateral grid for a first style can be applied, wherein for the second area of the input image a bilateral grid for the second style can be applied, for example. Hence, fast switching between the different styles is feasible simply by changing the bilateral grids applied to the respective first area and/or second area.

Preferably, more than 4 different styles are defined, more preferably more than 16 styles are defined.

Preferably, a feature decoder network is provided, wherein the feature decoder network provides an input image feature vector of the input image and a predefined style feature vector for each style to the bilateral grid prediction network. Thus, by the feature decoder network providing the input image feature vector and the predefined style feature vector, the respective bilateral grids can be generated for the respective styles. Therein, due to use of predefined style feature vectors the calculation of the respective predefined style feature vectors is not necessarily during runtime, thereby greatly reducing the computational costs and the complexity of the network. Thus, calculation of the bilateral grids for the different styles can be done in real-time.

Preferably, the predefined style feature vectors are stored in a lookup table.

Preferably, the predefined style feature vectors have a length equal to or below 512 bit, preferably equal to or below 256 bit, preferably equal to or below 128 bit, and preferably equal to or below 64 bit. The longer the predefined style feature vectors, the more different styles can be used. Therein, it has been noted that for a length of 512 bit, 64 different predefined style feature vectors could be implemented.

Preferably, the predefined style feature vectors are statistically decorrelated vectors discriminating the different styles upon generating the bilateral grids.

Preferably, training of the bilateral grid prediction network is performed by a single set of input training images and a plurality of sets of ground truth training images, wherein the ground truth training images are the quality enhanced input training images in particular of a certain style. Thus, for example, the input training images may be manually quality enhanced and used as ground truth training images. Since only one bilateral grid prediction network is implemented generating the one or more bilateral grids, training can be done by full end to end flow through the low-resolution path and high-resolution path in a single training.

Preferably, for each style at least a set of input training images is provided.

Preferably, for each input training image a feature vector is determined, wherein the predefined style feature vector is calculated on the basis of the determined feature vectors of the input training images. Therein, the feature vector calculation can be performed by a network like VGG-19. The respective feature vectors of each input training image is calculated and the predefined style feature vector can be calculated by for example taking the average of the feature vectors of all the ground truth training images for each style. Other possibilities for calculating the predefined style feature vectors are also feasible such as the median, the trimmed mean or the like.

Preferably, the image processing is performed in less than 30 ms and preferably less than 20 ms. In particular, the image processing is performed with 60 fps. Hence, the image processing can be done in real-time.

Preferably, the method is implemented as part of any ISP and can be implemented in various ways, such as hardware (HW), software (SW), dedicated accelerators such as digital signal processor (DSP), neural processing unit (NPU) or any combination of these.

In another aspect of the present invention, a device is provided including at least one processor and a memory storage connected to the at least one processor wherein the memory storage stores instructions, which when executed by the at least one processor performs the steps of the method described before.

In particular, the low-resolution path of the method can be implemented in an NPU or CPU, wherein the high-resolution path of the method may be implemented in a hardware implementation of the ISP or a dedicated DSP.

In another aspect of the present invention, a software storage device is provided, wherein the software storage device stores instructions, which when executed by a processor perform the steps of the method described before.

In the following the present invention is described in more detail with reference to the accompanying drawings.

The figures show:
- Figure 1: a schematic flow diagram of the method according to the present invention,
- Figure 2A: a detail representation of the method according to the present invention,
- Figure 2B: an alternative embodiment of the method according to the present invention,
- Figure 3: a detailed representation of the training,
- Figure 4: exemplified training input images,
- Figure 5: a device according to the present invention and
- Figure 6: another device according to the present invention.

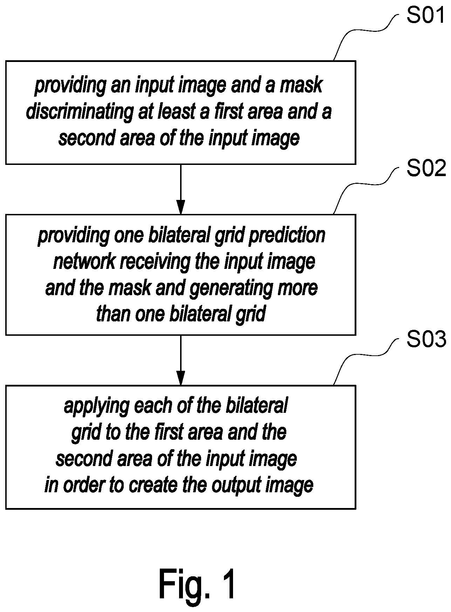

It is referred to Figure 1 showing a schematic flow diagram of the method according to the invention. The method comprises the steps:
In step S01 an input image and a mask discriminating at least a first area and a second area of the input image are provided.
In step S02 one bilateral grid prediction network received the input image and the mask and generating more than one bilateral grid.
In step S03 each of the bilateral grids are applied to the first area and/or the second area of the input image in order to create the output image.

In step S01 an input image is provided with a mask discriminating at least a first area and a second area of the input image. By the mask local manipulation of the input image is feasible. Therein, more than one mask can be provided discrimination the input image in more than the first area and the second area. In steps S02 more than one bilateral grid is provided by the bilateral grid prediction network. Therein, the generation of the bilateral grid is performed similar to the HDR-Net solution of the prior art. However, the bilateral grid prediction network is adapted to generate multiple bilateral grids in one path. Therein, the bilateral grid prediction network receives the input image and may also receive a predefined style feature vector as described in more detail below. Thus, tailored manipulation of the input image by the more than one bilateral grids is feasible, wherein only a single bilateral grid prediction network needs to be trained. Thus, the present method provides a more flexible approach than in the prior art. Since the generation of the more than one bilateral grid by the bilateral grid prediction network is fast, the present method can be applied in real time.

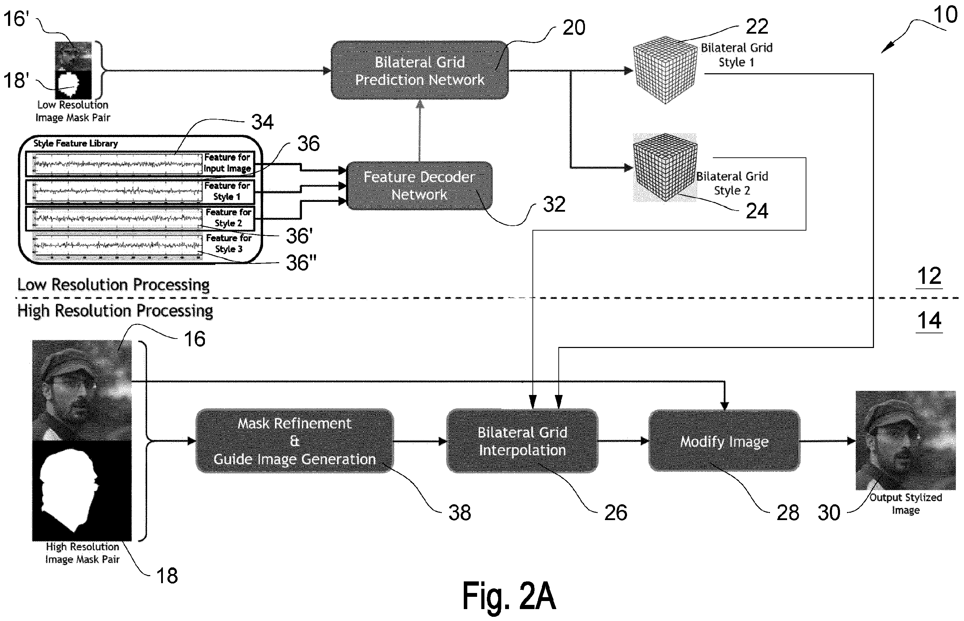

Referring to Figure 2A showing a simplified representation of the method according to the present invention. Similar to the HDR-Net algorithm, image processing according to the present invention is separated in a low-resolution path 12 and a high-resolution path 14. Thus, an input image 16 is provided together with an input mask 18. A low-resolution input image 16' is used in the low-resolution path 12 together with a low-resolution mask 18'. In a bilateral grid prediction network 20 the low-resolution input image and the low-resolution mask 16 are used in order to generate more than one bilateral grid. Therein, the generation of the bilateral grid is known in the art for example from the HDR-Net algorithm, wherein the output layer of the HDR-Net network is specifically adapted to generate more than one bilateral grid. In the example of Figure 2A a first bilateral grid 22 and a second bilateral grid 24 are generated. The first bilateral grid 22 and the second bilateral grid 24 are transferred to the high-resolution path 14 of the algorithm 10 and interpolated in a bilateral grid interpolation 26 to the resolution of the high-resolution input image 16 and the high-resolution mask 18. From the high-resolution input image 16 and the high-resolution mask 18 first a mask refinement and guide image generation 38 is performed in order to provide a guide image, which is mainly used for edge preserving during interpolation. The high-resolution version of the input image 16 is modified 28 by the bilateral grids 22, 24 in order to generate the output image 30. Therein, the first bilateral grid 22 may be applied to the foreground, wherein the second bilateral grid 24 is applied to the background of the input image 16 discriminated by the mask 18. In the example of figure 2A, the face may be manipulated by the first bilateral grid 22, wherein the background may be manipulated by the second bilateral grid. Therein, the first bilateral grid 22 and the second bilateral grid 24 may represent different styles. Each style corresponds to a specific appearance of the image when applied to an image and may encompass same or similar image parameters such as tone-mapping, brightness and contrast enhancement, advanced color alterations or the like. For each style a predefined style feature vector 36, 36', 36" is stored in a lookup table and selected for example by the user to be applied to the input image. In addition, the feature vector of the input image 34 is generated in a feature decoder network 32 and provided to the bilateral grid prediction network 20. Thereby, from the respective predefined style feature vectors 36, 36' which are selected in the example of Figure 2A, the respective bilateral grids 22, 24 are determined. Therein, the predefined style feature vectors 36, 36', 36" do not need to be calculated on the fly during runtime which would cause increased computational efforts. Instead they are precalculated in the training. Thereby, the necessary calculation can be reduced, and the image processing can be performed fast in real-time. Therein, the number of styles is mainly limited by the length of the predefined style feature vectors. It has been noted that for a length of 6 bit approximately four different styles can be supported. However, the length of the predefined style feature vector is 512 bit or below, preferably 256 bit or below and more preferably 128 bit or below.

Although the example of figure 2A shows only the generation of bilateral grids for two different styles, more than two bilateral grids for the respective styles can be generated by the bilateral grid prediction network 20 and applied to the input image for image processing.

Due to the nature of the two different paths 12, 14 in the bilateral learning algorithm, the low-resolution path 12 can be implemented for example in an NPU, CPU or the like, wherein the high-resolution processing can be hardware implemented in an ISP or any specific acceleration hardware such as a DSP or the like. Thus, by the implementation acceleration of the specific tasks in the low-resolution path 12 or the high-resolution path 14 can be improved in order to improve the runtime of the algorithm and achieve image processing in less than 30 ms and preferably less than 20 ms. In another words image processing is performed with up to 60 fps which is considered to be real time.

For enhancement of the processing time the high-resolution path 14 of the algorithm 10 is implemented as a fixed-function as a part of the ISP hardware. Even the high-resolution path 14 is designed as a fixed function, it still corresponds to a convolutional neural network (CNN) and the weights for the high-resolution path 14 are calculated through typical CNN training. Furthermore, the mask refinement and guide image generation 38 may be trained separately to further correct the imperfections in the incoming high-resolution mask and generate more accurate guide image. Alternatively and in a preferred embodiment the mask refinement and guide image generation 38 may be trained together with the bilateral grid prediction network 20.

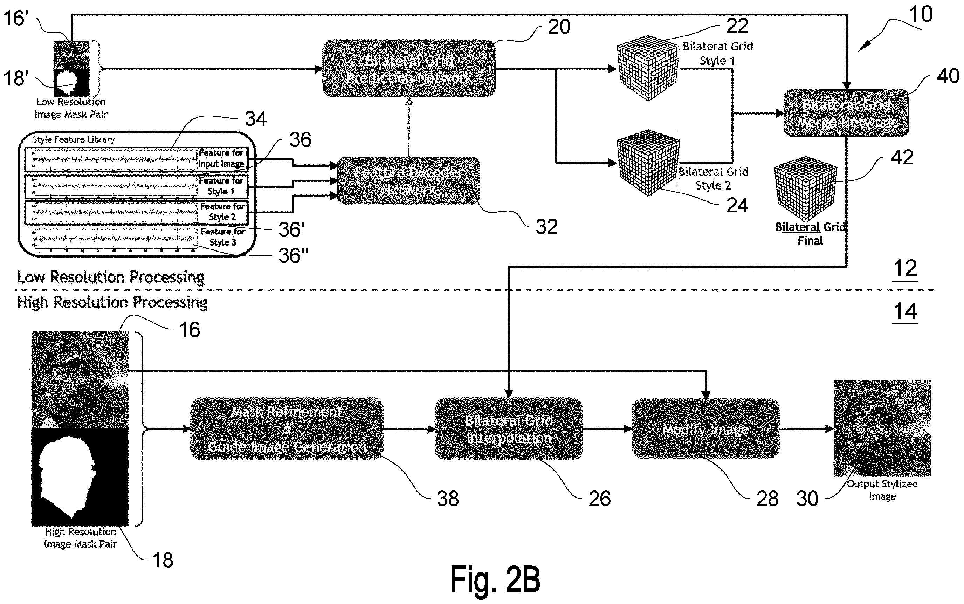

Referring to Figure 2B which shows a similar method according to Figure 2A, wherein only the first bilateral grid 22 and the second bilateral grid 24 are merged in a bilateral grid merge network 40 in order to form a final bilateral grid 42. Then only the final bilateral grid 42 is interpolated in the high-resolution path 14 of the algorithm in order to be applied to the input image 16.

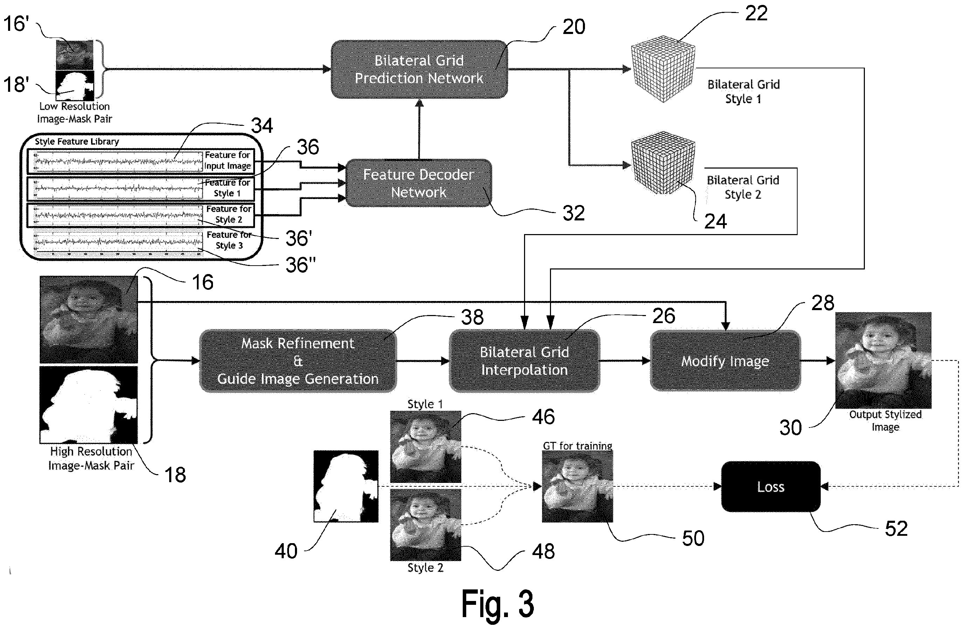

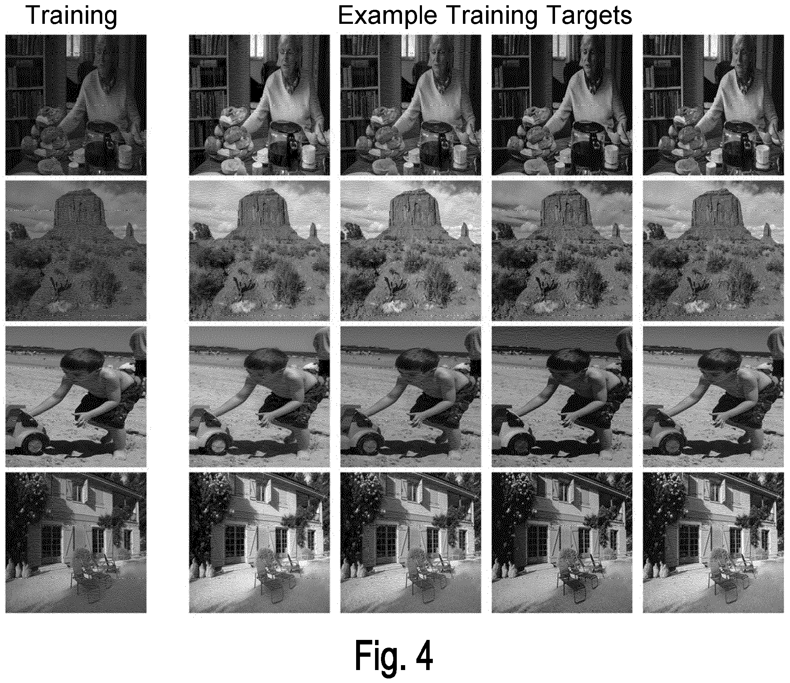

Referring to Figure 3 showing a training algorithm for the method according to the present invention. Therein, training of the method is done in a full run of the low-resolution path and the high-resolution path from the beginning to the end. Therein, a set of input training images 16 and respective masks 18 are used. From these input training images a plurality of sets of training images 46, 48 are generated by quality enhancing the input training images for example manually. Therein, for each style one set of quality enhanced input training images 46, 48 are provided. Together with the mask 40, corresponding to the mask 18 of the input training images 18, ground truth training images 50 of a respective style are created. Figure 4 shows four different training input images and ground truth training images four different styles, which can be used for training.

The input training image 16 is provided to the algorithm 10 resulting in an output image 30. A loss function 52 is calculated from the output image 30 and the ground truth training image 50, wherein the loss function is used to train the bilateral grid prediction network 20. The success of the training may be evaluated using several different loss functions. These loss functions may be selected according to the target accuracy criteria. For example, if the color accuracy is the most common criterion, a distance metric (such as L1, L2 or any combination of them) can be used in UV or ab channels of a YUV and Lab, respectively. In case the contrast and brightness are more important, then one can use Y or L channels. Furthermore, in order to get the sharpness and details more accurately, metrics such as structural similarity index (SSIM) may be used.

There is no limitation on the number of target styles for the ground truth dataset, the network still requires additional input to identify and differentiate the input image and the desired target styles. This is achieved by using representative feature vector per image set, *i.e.* feature vectors per input training image and per style. These feature vectors can be calculated by using feature extraction network like VGG-19. Once per-image feature vectors are calculated, the per style representative feature vector can be calculated by taking the average of the feature vectors of all the images within that style. Instead of use of the mean operator other operators can be also employed, e.g. median, trimmed-mean etc. Alternatively, these representative feature vectors can also be manually calculated using a random number generator as long as they the generated predetermined style feature vectors are un-correlated from each other. The length of the feature vectors depends on the number of styles to be learned. The more styles are required to be supported, the longer feature vectors are required.

It has been shown that the embodiment of Figure 2A with application of two different bilateral grids 22, 24 after interpolation of the bilateral grid interpolation 26 to the input image 16 has improved trainability since the step of merging the first bilateral grid 22 and the second bilateral grid 24 in the bilateral grid merge network 40 is avoided. Hence, training of the bilateral grid merge network and effects on the output image 30 by the bilateral grid merge network 40 are circumvent.

Hence, the bilateral grid prediction network 20 can learn multiple styles with a single training. Therein, it can be trained with a single style or with multiple selected styles by executing the full end to end flow solution as shown in Figure 3 including the low-resolution path 12 and the high-resolution path 14.

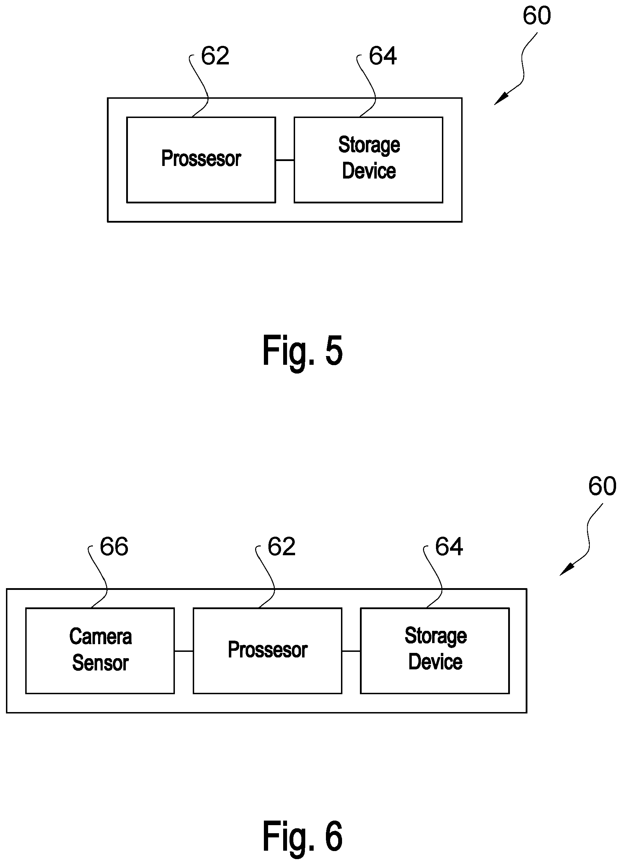

Referring to Figure 5 showing a device 60 according to the present invention. The device 60 comprises a processor 62 and a storage 64 connected to the processor 62, wherein the storage 64 stores instructions which when executed by the processor 62 perform the steps of the method described before. Therein, the processor 62 may a processor of an implementing device such as a terminal device or smartphone. In particular, the device 60 may contain more than one processor or processing unit such as an NPU or DSP dedicated to perform individual task of the algorithm. Thus, the high-resolution path 14 and the low-resolution path 12 can be implemented in dedicated processors 62. Alternatively the algorithm can be completely software implemented such that the software instructions are stored in the storage 64 and executed by the processor 62, wherein the processor 62 may be the main processing unit of the implementing device such as a terminal or a smartphone.

Referring to Figure 6 showing a device similar to Figure 5. Therein, the processor 62 is connected to a camera sensor 66 in order to acquire the input image processed by the method according to the present invention.

## Claims

1. Image processing method, in particular Image Quality Enhancement, IqE, method, with
providing an input image and a mask discriminating at least a first area and a second area of the input image;
providing one bilateral grid prediction network receiving the input image and the mask and generating more than one bilateral grid;
applying each of the bilateral grid to the first area and/or the second area of the input image in order to create the output image.

2. Method according to claim 1, wherein the more than one bilateral grids are merged into a final bilateral grid before applying or the more than one bilateral grids are individually applied.

3. Method according to claim 1 or 2, wherein the bilateral grid prediction network receives a low resolution input image having a resolution lower than the input image and the more than one bilateral grids or the final bilateral grid are upsampled before applied to the input image.

4. Method according to any of claims 1 to3, wherein a plurality of styles are defined to be applied to the input image, the first area or the second area, wherein each style corresponds to a set of image parameters, such that images of the same style have a similar appearance.

5. Method according to claim 4, wherein each bilateral grid corresponds to a different style.

6. Method according to claims 4 or 5, wherein a feature decoder network is provided, wherein the feature decoder network provides an input image feature vector of the input image and a predefined style feature vector for each style to the bilateral grid prediction network.

7. Method according to claim 6, wherein the predefined style feature vectors are stored in a look-up table.

8. Method according to claims 6 or 7, wherein the predefined style feature vector has a length of 512bit or less, preferably 256bit or less.

9. Method according to any of claims 1 to 8, wherein training of the bilateral grid prediction network is performed by a single set of input training images and a plurality of sets of ground truth training images, wherein the ground truth training images are quality enhanced images.

10. Method according to claim 9, wherein for each style a set of ground truth training images is provided.

11. Method according to claims 9 or 10, wherein for each input training image a feature vector is determined, wherein the predefined style feature vector is calculated on the basis of the determined feature vectors of the input training images.

12. Method according to any of claims 1 to 11, wherein the image processing is performed in less than 30ms and preferably less than 20ms.

13. Device including at least one processor and a memory storage connected to the at least one processor, wherein the memory storage stores instructions which when executed by the at least one processor perform the steps of the method according to any of claims 1 to 12.

14. Software storage device storing instructions which when executed by a processor perform the steps of the method according to any of claims 1 to 11.
